# EUROPÄISCHE PATENTANMELDUNG

(11) **EP 1 916 274 A2**
(43) Veröffentlichungstag der Anmeldung: **30.04.2008**
(21) Anmeldenummer: 07012041.5
(22) Anmeldetag: 20.06.2007
(51) Int. Cl.: C08G 65/26

(54) **Hydroxyfunktionelle, copolymerisierbare Polyalkylenglykol-Makromonomere, deren Herstellung und Verwendung**

(30) Priorität: 23.10.2006 DE 102006049803
(71) Anmelder: Clariant International Ltd., 4132 Muttenz (CH)
(72) Erfinder: Pöllmann, Klaus, Dr., 84489 Burghausen (DE); Strasser, Anton, 84503 Altötting (DE); Müller, Sieglinde, 84508 Burgkirchen (DE)
(74) Vertreter: Mikulecky, Klaus

(57) **Zusammenfassung**

Die vorliegende Erfindung betrifft ein Verfahren zur Herstellung von Estern a,β-ethylenisch ungesättigter Carbonsäuren mit Polyalkylenglykolen, indem man eine a,β-ethylenisch ungesättigte Carbonsäure oder deren reaktives Derivat mit einem C₂-bis C₄-Alkylenoxid oder einem Gemisch solcher Alkylenoxide zur Reaktion bringt, dadurch gekennzeichnet, dass diese Reaktion in Gegenwart von 10 bis 10.000 ppm, bezogen auf das Gewicht der eingesetzten α,β-ethylenisch ungesättigten Carbonsäure, an entweder 2,2,6,6-Tetramethylpiperidin-1-oxyl oder 4-Hydroxy-2,2,6,6-Tetramethyl-piperiden-1-oxyl stattfindet.

## Beschreibung

Die vorliegende Erfindung betrifft ein Verfahren zur Herstellung von reinen Ω-Hydroxy-Polyalkylenglykolen, die α-ständig eine ungesättigte, konjugierte Estergruppe aufweisen, insbesondere von Ω-Hydroxy-methacryloyl- oder Ω-Hydroxy-α-acryloyl-Polyalkylenglykolen und deren Verwendung als copolymerisierbare Makromonomere zur Emulgierung, Dispergierung und sterischen Stabilisierung von Polymeren in wässrigen Systemen.

Polyalkylenglykole werden großtechnisch üblicherweise durch anionische, alkalisch katalysierte, ringöffnende Polymerisation von Epoxiden (Ethylenoxid, Propylenoxid, Butylenoxid) unter hohem Druck und hoher Temperatur hergestellt (siehe Ullmann Encyclopedia of Industrial Chemistry 5. ed VCH, ISBN 3-527-20100-9). Mit Alkoholen R'-OH als Initiator, wie zum Beispiel mit Methanol, entstehen so sehr spezifisch entsprechend Gleichung 1 α-Methoxy-Ω-hydroxy-Polyalkylenglykole

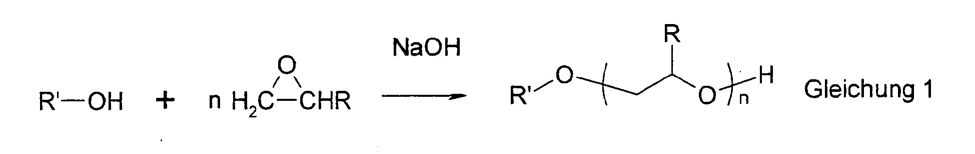

Mit Carbonsäuren als Initiator findet eine ähnliche Reaktion gemäß Gleichung 2 statt.

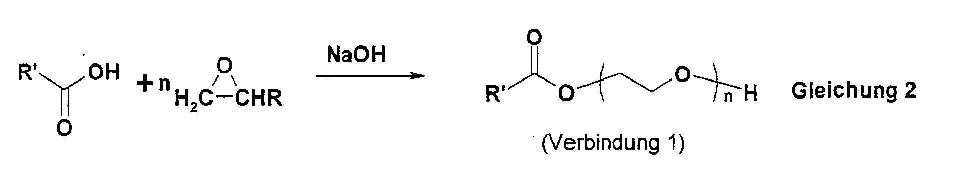

Die so entstehenden Ester unterliegen allerdings im alkalischen Reaktionsmedium einer parallel zur ringöffnenden Polymerisation verlaufenden permanenten Hydrolyse- und Umesterungsreaktion gemäß Gleichung 3, die zu einem Produktgemisch von α-Ω-Dihydroxy-Polyalkylenglykolen, α-Ω-Di-Estern und dem Zielprodukt (Verbindung 1) führt.

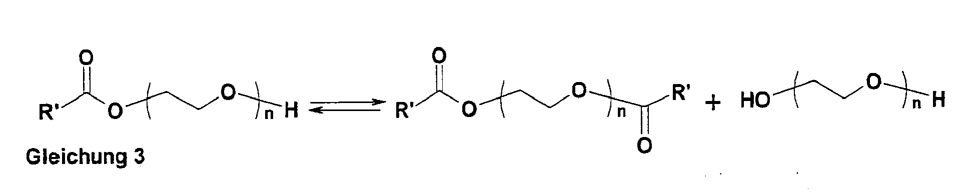

Polyalkylenglykol-Makromonomere sind solche Polyalkylenglykole, die zusätzlich zur Polyetherkette eine reaktive, copolymerisierbare, endständige Doppelbindung enthalten. Sie werden zur Herstellung von so genannten Kammpolymeren mit Polyalkylenglykolseitengruppen (DE-A-100 17 667) oder als reaktive Emulgatoren in der Emulsionspolymerisation (EP-A-1 531 933) eingesetzt. Die dort beschrieben Ω-Hydroxy-α-Alfyloxy- bzw. Ω-Hydroxy-α-Vinyloxy-funktionellen Polyalkylenglykol-makromonomere weisen jedoch den Nachteil auf, dass sie bedingt durch die ungünstige Copolymerisationsneigung mit vielen gängigen Comonomeren nicht als hydroxy-funktionelle Makromonomere einsetzbar sind. Allgemeiner einsetzbar und damit wesentlich vorteilhafter sind Ω-hydroxy-funktionelle Polyalkylenglykol-Makromonomere, die in α-Stellung die Estergruppe einer konjugierten ungesättigten Säure aufweisen, insbesondere Ω-hydroxy-funktionelle -α-methacryfoyl- oder α-acryloyl-Polyalkylenglykol-Makromonomere. Unter konjugiert ungesättigten Carbonsäuren und Estern werden Verbindungen mit einer C=C-Doppelbindung in a,β-Position zum C-Atom der Carbonylgruppe verstanden, die also das folgende Strukturelement enthalten:

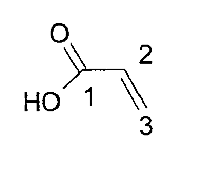

Die Herstellung solcher Ω-hydroxy-funktioneller Polyalkylenglykol-Makromonomere in reiner Form, die in α,β-Stellung den Ester einer konjugierten ungesättigten Säure aufweisen, ist jedoch aus zwei Gründen schwierig.

Erstens sind bedingt durch die unter Gleichung 3 beschriebene Umesterungsreaktion solche Makromonomere rein nicht mittels anionisch, alkalisch katalysierter, ringöffnende Polymerisation von Epoxiden direkt zugänglich. Es wurden daher verschieden Versuche mit nicht-alkalischen Katalysatoren unternommen, Polyalkylenglykolester-Makromonomere (Verbindung 1) herzustellen. Insbesondere wurden Chrom- und Zinnsalze (JP-2006-070147, JP-2003 073331, CAS AN 103: 215878), Bortrifluorid- (US-3 689 532) und ZnCo-Komplexe (US-6 034 208) als Katalysatoren vorgeschlagen um vor allen Polyalkylenglykol-Makromonomere ausgehend von ungesättigten Carbonsäuren wie Methacrylsäure, Acrylsäure oder Maleinsäure herzustellen (JP-2006-070147). Dabei konnten jedoch entweder nur niedrige Molmassen erreicht werden oder aber die Produkte enthielten bedingt durch stattfindende Umesterungsreaktionen gemäß Gleichung 3 einen hohen Anteil an vernetzend wirkendem Di-Ester (Ali, Stover, Macromolecules pp. 5219 ff, Vol 37, 2004).

Zweitens weisen Derivate von konjugierten, ungesättigten Säuren, insbesondere die Acryl- und Methacrylsäurederivate, eine große Neigung zur Homopolymerisation auf, so dass die Umsetzungen mit den Alkylenoxiden wenn überhaupt nur in Gegenwart von hohen Konzentrationen an Polymerisationsinhibitoren durchgeführt werden können (JP-63284146, JP-2005-281274). Nach dem Stand der Technik werden dazu phenolische oder aminische Polymerisationsinhibitoren wie beispielsweise Hydroquinon, Methylhydroquinon, tert-Butylhydroquinon, Benzoquinon, BHA, p-Phenylendiamin oder Phenothiazin eingesetzt. Diese Inhibitoren reagieren durch Ihre aktiven OH- oder NH-Endgruppen ihrerseits mit den Epoxiden zu anderen unerwünschten Nebenprodukten. Häufig ist ihre Inhibitorwirkung auch nicht ausreichend um die Polymerisation der konjugierten ungesättigten Säure-/Estergruppe vollständig zu verhindern. Man erhält deshalb bei Umsetzungen mit Alkylenoxiden Makromonomere, die mit hochmolekularen Polymeren verunreinigt sind, die durch Polymerisation an der konjugierten ungesättigten Säurengruppe entstanden sind. Solche hochpolymeren Verunreinigungen sind mittels Gelpermeationschromatographie (GPC) als Komponenten mit Molmassen größer 20000 g/mol zu erkennen.

EP-A-1 012 203 beschreibt die Umsetzung von konjugiert ungesättigten Carbonsäuren und Hydroxyestern mit Alkylenoxiden in Gegenwart von so genannten DMC-Katalysatoren (DMC (Doppel-Metal-Cyanid-Katalysatoren) und spezieller Vinyl-Polymerisationsinhibitoren wie 1,4 Benzoquinon, Naphtoquinon oder Trinitrobenzol, die jedoch nicht wirksam genug sind die Polymerisation der konjugiert ungesättigten Säure- bzw. Estergruppen unter den Bedingungen der technisch praktikablen Alkylenoxidpolymerisation vollständig zu verhindern.

Um α-Methacryloyl- oder α-Acryloyl-Polyalkylenglykolmakromonomere herzustellen werden deshalb häufig in einem aufwendigen, zweistufigen Prozess zunächst α-Methoxy-Ω-hydroxy-Polyalkylenglykole (M-PEGs) hergestellt und diese durch Veresterung mit Acrylsäure oder Methacrylsäure in die α-Methoxy-Ω-Methacryloyl-Polyalkylenglykolester (WO-A-00/012 577, EP-A-0 965 605) überführt (Gleichung 4)

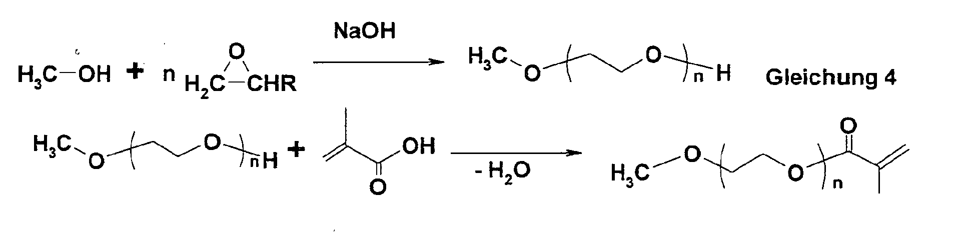

Diese α-Methoxy-Ω-Methacryloyl-Pofyalkylenglykol-makromonomere enthalten jedoch keine freien Hydroxygruppen mehr, weisen deshalb ungünstigere Emulgiereigenschaften auf und sind bedingt durch die endständige nicht-reaktive Ω-Methoxy-Gruppe keinen weiteren Reaktionen mehr zugänglich.

Aufgabe der vorliegende Erfindung war es deshalb, ein Verfahren zur Herstellung von reinen Ω-hydroxyl-funktionelle Polyalkylenglykol-Makromonomeren, die in α-Stellung die Struktureinheit eines konjugierten, ungesättigten Carbonsäureesters tragen, insbesondere von Ω-Hydroxy-α-methacryloyl- oder Ω-Hydroxy-α-acryloyl-Polyalkylenglykolen zu finden, bei dem nicht als Nebenreaktion eine Homopolymerisation der konjugierten ungesättigten Gruppe stattfindet und bei dem nicht die Hydrolyse- und Umesterung gemäß Gleichung 3 stattfindet, so dass reine lineare Ω-Hydroxy-α-(meth)acryloyl-Polyalkylenglykole entstehen. Insbesondere war es Aufgabe der vorliegenden Erfindung, lineare Ω-Hydroxy-α-(meth)acryloyl-Polyalkylenglykolblockcopolymere auf diese Weise herzustellen.

Überraschenderweise wurde gefunden, dass die Aufgabe durch die Herstellung solcher Copolymere in Gegenwart von 10 - 10000 ppm der Polymerisationsinhibitoren 2,2,6,6-Tetramethylpiperidin-1-oxyl oder 4-Hydroxy-2,2,6,6-Tetramethylpiperidin-1-oxyl gelöst werden kann.

Gegenstand der Erfindung ist somit ein Verfahren zur Herstellung von Monoestern α,β-ethylenisch ungesättigter Carbonsäuren mit Polyalkylenglykolen, indem man eine α-β-ethylenisch ungesättigte Carbonsäure oder deren reaktives Derivat mit einem C₂-bis C₄-Alkylenoxid oder einem Gemisch solcher Alkylenoxide zur Reaktion bringt, dadurch gekennzeichnet, dass diese Reaktion in Gegenwart von 10 bis 10.000 ppm, bezogen auf das Gewicht der eingesetzten α,β-ethylenisch ungesättigten Carbonsäure, an entweder 2,2,6,6-Tetramethylpiperidin-1-oxyl oder 4-Hydroxy-2,2,6,6-Tetramethylpiperidin-1-oxyl stattfindet.

Ein weiterer Gegenstand der Erfindung sind Zusammensetzungen, erhältlich nach dem erfindungsgemäßen Verfahren, die 1 bis 10.000 ppm 2,2,6,6-Tetramethylpiperidin-1-oxyl oder 4-Hydroxy-2,2,6,6-Tetramethylpiperidin-1-oxyl enthalten. Nach dem erfindungsgemäßen Verfahren herstellbar sind insbesondere die Verbindungen der folgenden Formeln (1) und (2).

Die zur Anwendung kommenden Alkylenoxide, sind Ethylenoxid, Propylenoxid oder Butylenoxid.

Die entstehenden Reaktionsprodukte sind formal Ester aus Carbonsäuren und Polyalkylenglykolen. Unter Monoestern sollen vorliegend Ester verstanden werden, bei denen nur eine der beiden endständigen Hydroxylgruppen der Polyalkylengruppe verestert sind. Der Begriff des Monoesters bezieht sich nicht auf die Carbonsäure. Diese kann, sofern es sich mindestens um eine Dicarbonsäure handelt, zweifach verestert werden.

Handelt es sich bei der α,β-ethylenisch ungesättigten Carbonsäure um eine Monocarbonsäure, so entsprechen die Produkte des erfindungsgemäßen Verfahrens vorzugsweise der Formel 1 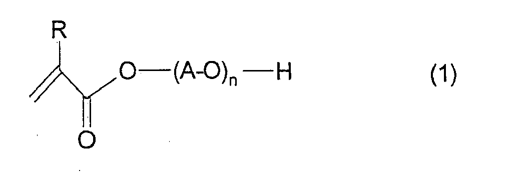 worin
R für Wasserstoff oder Methyl
A für C₂- bis C₄-Alkylen und
n für eine Zahl von 1 bis 500 stehen.

Handelt es sich bei der α,β-ethylenisch ungesättigten Carbonsäure um eine Dicarbonsäure, so entsprechen die Produkte des erfindungsgemäßen Verfahrens vorzugsweise der Formel (2) 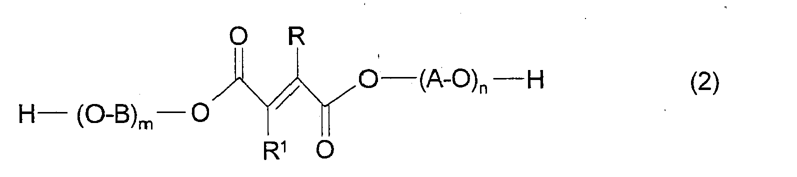 worin
R, R¹ unabhängig voneinander H oder Methyl,
A, B unabhängig voneinander C₂- bis C₄-Alkylen,
n, m unabhängig voneinander Zahlen von 1 bis 500 bedeuten.

(A-O)ₙ und (B-O)ₘ können für gemischte Alkylenoxidgruppen in statistischer oder Blockanordnung stehen, oder für einheitliche Alkylenoxidgruppen. In einer bevorzugten Ausführungsform stehen (A-O)ₙ und/oder (B-O)ₘ für gemischte Alkoxygruppen, die Ethylenoxid- und Propylenoxideinheiten enthalten, wobei der molare Anteil der Ethylenoxideinheiten 50 % oder mehr beträgt.

n und m stehen vorzugsweise für Zahlen zwischen 3 und 250, insbesondere 5 bis 200.

Reaktive Derivate von α,β-ethylenisch ungesättigten Carbonsäuren sind insbesondere deren Ester, speziell deren Hydroxyalkylester.

Geeignete konjugierte, α,β-ungesättigte Säuren sind insbesondere Acrylsäure, Methacrylsäure, Fumarsäure, Maleinsäure, Itaconsäure. Geeignete konjugierte, ungesättigte Hydroxyalkylester bzw. Hydroxyalkylethoxy- und Hydroxyalkylpropoxyester sind insbesondere Hydroxyethylmethacrylat, Hydroxypropylmethacrylat, Hydroxyethylacrylat, Hydroxypropylacrylat, Diethylenglykol-monomethacrylsäureester, Diethylenglykol-monoacrylsäureester, Dipropylenglykol-monomethacrylsäureester, Dipropylenglykol-monoacrylsäureester, Triethylenglykol-monomethacrylsäureester, Triethylenglykol-monoacrylsäureester, Tripropylenglykol-monomethacrylsäureester, Tripropylenglykol-monoacrylsäureester.

Die erfindungsgemäßen Polymerisationsinhibitoren 2,2,6,6-Tetramethylpiperidin-1-oxyl oder 4-Hydroxy-2,2,6,6-Tetramethylpiperidin-1-oxyl verhindern wirksam die Bildung von Hochpolymeren durch Polymerisation der konjugierten ungesättigten Säure-/Estergruppe in den Edukten und den copolymerisierbaren Makromonomeren während ihrer Herstellung durch Anlagerung der Alkylenoxide bei technisch interessanten Reaktionstemperaturen von 80 bis 130°C.

Neben den erfindungsgemäßen Polymerisationsinhibitoren 2,2,6,6-Tetramethylpiperidin-1-oxyl oder 4-Hydroxy-2,2,6,6-Tetramethylpiperidin-1-oxyl können noch zusätzlich bekannte Polymerisationsinhibiotoren, insbesondere phenolische oder aminische Polymerisationsinhibitoren vorhanden sein.

Die erfindungsgemäße Umsetzung der konjugierten Ungesättigten Säuren oder reaktiven Derivate wie konjugierte ungesättigte Hydroxyalkylester mit Alkylenoxiden muss in Gegenwart von so genannten DMC-Katalysatoren (Doppel-Metal-Cyanid-Katalysatoren) erfolgen. Diese Katalysatoren haben zum Beispiel die allgemeinen Formel Zn₃[Co(CN)₆]₂•xZnCl₂•yH₂O•z Glyme mit x = 0,2 bis 3, y = 1 bis 10 und z = 0,5 bis 10, wie in EP-B-0 555 053 offenbart. Geeignete DMC-Katalysatoren sind in der Literatur auch mit anderen Komplexliganden bekannt. Ihre Herstellung und Zusammensetzung wird unter anderem in EP-A-1 244 519, EP-A-0 761 708, EP-A-654 302 und EP-A-1 276 563 beschrieben. Insbesondere sind die in Beispiel 2 von EP-A-1 276 563 beschriebenen DMC Katalysatoren geeignet.

Die Alkylenoxide werden in einer bevorzugten Ausführungsform einzeln, nacheinander oder im Gemisch dosiert um Di- oder Triblockcopolymere oder Blockcopolymere mit unterschiedlicher statistischer Verteilung der Alkylenoxideinheiten in den Blöcken zu erzielen. Die Umsetzung der Gemische von konjugiert ungesättigten Säuren oder deren reaktiven Derivate mit den Polymerisationsinhibitoren und den Alkylenoxiden erfolgt unter den üblichen Reaktionsbedingungen einer technischen Alkoxylierung, das heißt im Temperaturbereich 80 bis 150°C bevorzugt 100 bis 130°C und Drücken zwischen 2 und 20 bar unter Stickstoff gegebenenfalls in Gegenwart von inerten, aprotischen Lösungsmitteln wie beispielsweise Toluol, Xylol oder THF.

Die Molmassen der erfindungsgemäßen Reaktionsprodukte wie Ω-Hydroxy-α-methacryloyl- oder Ω-Hydroxy-α-acryloyl-Polyalkylenglykol-Makromonomere bzw. der entsprechenden Gemische mit den Polymerisationsinhibitoren kann mittels Bestimmung der OH-Zahl (nach DIN 53240 Bestimmung des Zahlenmittels Mn) und durch GPC-Analyse mit PEG-Eichung (Bestimmung der Molmassenverteilung) ermittelt werden. Die Molmasse liegt im Allgemeinen zwischen 500 und 10000 g/mol, bevorzugt zwischen 750 und 7000 g/mol. Das Verhältnis konjugiert ungesättigter Carbonsäure zu Propylenoxid-, Ethylenoxid-Einheiten und Hydroxylendgruppen im Makromonomer kann mittels NMR-Spektroskopie ermittelt werden. Entscheidend ist die Tatsache, dass sich durch die Verwendung der erfindungsgemäßen Gemische der Polymerisationsinhibitoren 2,2,6,6-Tetramethylpiperidin-1-oxyl oder 4-Hydroxy-2,2,6,6-Tetramethylpiperidin-1-oxyl und den entsprechenden konjugierten ungesättigten Säuren oder Hydroxyalkylestern als Initiatoren der Alkylenoxidpolymerisation keine Polymerisate der konjugierten ungesättigten Säuren oder Hydroxyalkylestern bilden und keine α-Ω-Di-Ester-Polyalkylengfykole entstehen. Diese unerwünschten Polymerisate würden sich in der GPC-Analytik durch einen sehr hochmolekularen Anteil mit Molmassen > 10000 g/mol sowie in der NMR-Spektroskopie durch eine deutlichen Unterschuss an konjugierten Doppelbindungen im Verhältnis zu den Endhydroxygruppen und den stöchiometrischen Einsatzmengen an Ethylenoxid und Propylenoxid zeigen (s. Vergleichsbeispiel 1).

Die erfindungsgemäßen Reaktionsprodukte, insbesondere die Gemische der Verbindungen der Formeln 1 oder 2, mit 10 bis 10000 ppm der Polymerisationsinhibitoren 2,2,6,6-Tetramethylpiperidin-1-oxyl oder 4-Hydroxy-2,2,6,6-Tetramethylpiperidin-1-oxyl können mit einer Vielzahl von radikalisch polymerisierbaren Monomeren wie beispielsweise Styrol, Vinylacetat Acrylsäure, Methacrylsäure und deren Alkylester in Substanz und wässriger Lösung durch Verwendung gängiger Initiatoren der radikalischen Polymerisation copolymerisiert werden. Die resultierenden Kammpolymere mit Polyalkylenseitenketten sind durch die Polyalkylenglykolseitenketten sterisch stabilisiert und bilden so stabile wässrige Polymerdispersionen.

Die Erfindung und Anwendungen davon soll nun anhand von Beispielen weiter erläutert werden.

### Beispiel 1:

In einem 1 I Druckreaktor wird 0,625 mol (90 g) Hydroxypropylmethacrylat und 0,045 g 2,2,6,6-Tetramethylpiperidin-1-oxyl und 0,045 g des in EP-A-1 276 563 beschriebenen DMC Katalysators vorgelegt. Das Gemisch wird unter Stickstoff auf eine Temperatur auf 110°C aufgeheizt und bei einem Druck von etwa 3 bar eine Menge von 72,5 g Propylenoxid so dosiert, dass die entstehende Reaktionswärme abgeführt werden kann. Nach der Abreaktion des Propylenoxids erkennbar am Druckabfall wird 560 g Ethylenoxid erneut so dosiert, dass die entstehende Reaktionswärme abgeführt werden kann. Nach der Abreaktion erkennbar am Druckabfall auf den Ausgangsdruck wird das Produkt mittels OH-Zahl-Titration, NMR-Spektroskopie und GPC- Molmassenbestimmung analysiert.

| OH-Zahl in mg KOH/g nach DIN 53240 | Berechnete Molmasse Mn aus OH-Zahl in g/mol | NMR Molverhältnis aus ¹H NMR Signalen Doppelbindung-Methacryl : PO : EO : CH₂OH | GPC Charakterisierung (lipophile GPC in THF mit PEG Eichstandards) |
|---|---|---|---|
| 50,6 | 1109 | 1 : 2,9 : 20 : 1,07 | ein Hauptpeak > 92 % mit Maximum bei 1100 g/mol keine Polymeranteile mit Molmassen über 2500 g/mol |

Es ist damit ein Methacrylsäureester-(PO)₃(EO)₂₀-OH Blockcopolymer entstanden.

### Beispiel 2:

In einem 1 I Druckreaktor wird 0,625 mol (90 g) Hydroxypropylmethacrylat und 0,045 g 2,2,6,6-Tetramethylpiperidin-1-oxyl und 0,045 g des in EP-A-1 276 563 beschriebenen DMC Katalysators vorgelegt. Das Gemisch wird unter Stickstoff auf eine Temperatur auf 120°C aufgeheizt und bei einem Druck von etwa 3 bar eine Menge von 72,5 g Propylenoxid so dosiert, dass die entstehende Reaktionswärme abgeführt werden kann. Nach der Abreaktion des Propylenoxids erkennbar am Druckabfall wird 560 g Ethylenoxid erneut so dosiert, dass die entstehende Reaktionswärme abgeführt werden kann. Nach der Abreaktion erkennbar am Druckabfall auf den Ausgangsdruck wird das Produkt mittels OH-Zahl-Titration, NMR-Spektroskopie und GPC-Molmassenbestimmung analysiert.

| OH-Zahl in mg KOH/g nach DIN 53240 | Berechnete Molmasse Mn aus OH-Zahl in g/mol | NMR Molverhältnis aus ¹H NMR Signalen Doppelbindung-Methacryl : PO : EO : CH₂OH | GPC Charakterisierung (lipophile GPC in THF mit PEG Eichung) |
|---|---|---|---|
| 50,6 | 1109 | 1 : 2,9 : 20 : 1,07 | ein Hauptpeak > 92 % mit Maximum bei 1100 g/mol keine Polymeranteile mit Molmassen über 2500 g/mol |

Es ist damit ein Methacrylsäureester-(PO)₃(EO)₂₀-OH Blockcopolymer entstanden Hochpolymere Anteile mit Molmassen > 10000 g/mol wie sie durch Polymerisation der konjugierten Doppelbindung der Methacrylsäuregruppe entstehen würden, sind nicht vorhanden.

### Beispiel 3:

In einem 3 I Druckreaktor wird 1 mol (144 g) Hydroxypropylmethacrylat und 0,05 g 2,2,6,6-Tetramethylpiperidin-1-oxyl und 0,15 g des in EP-A-1 276 563 beschriebenen DMC Katalysators vorgelegt. Das Gemisch wird unter Stickstoff auf eine Temperatur auf 100°C aufgeheizt und bei einem Druck von etwa 3 bar eine Menge von 58 g Propylenoxid so dosiert, dass die entstehende Reaktionswärme abgeführt werden kann. Nach der Abreaktion des Propylenoxids erkennbar am Druckabfall wird 1994 g Ethylenoxid erneut so dosiert, dass die entstehende Reaktionswärme abgeführt werden kann. Nach der Abreaktion erkennbar am Druckabfall auf den Ausgangsdruck wird das Produkt mittels OH-Zahl-Titration, NMR-Spektroskopie und GPC-Molmassenbestimmung analysiert.

| OH-Zahl in mg KOH/g nach DIN 53240 | Berechnete Molmasse Mn aus OH-Zahl in g/mol | NMR Molverhältnis aus ¹H NMR Signalen Doppelbindung-Methacryl : PO : EO : CH₂OH | GPC Charakterisierung (lipophile GPC in THF mit PEG Eichung) |
|---|---|---|---|
| 28,8 | 1947 | 1 : 2,1 : 37 : 1,15 | ein Hauptpeak > 90 % mit Maximum bei ca. 1700 g/mol keine Polymeranteile mit Molmassen über 3000 g/moi |

Es ist damit ein Methacrylsäureester-(PO)₂(EO)₃₇-OH Blockcopolymer entstanden Hochpolymere Anteile mit Molmassen > 10000 g/mol wie sie durch Polymerisation der konjugierten Doppelbindung der Methacrylsäuregruppe entstehen würden, sind nicht vorhanden

### Beispiel 4:

In einem 11 Druckreaktor wird 1 mol (130 g) Hydroxyethylmethacrylat und 0,1 g 2,2,6,6-Tetramethylpiperidin-1-oxyl und 0,2 g des in EP-A-1 276 563 beschriebenen DMC Katalysators vorgelegt. Das Gemisch wird unter Stickstoff auf eine Temperatur auf 120°C aufgeheizt und bei einem Druck von etwa 2 bar eine Menge von 232 g Propylenoxid so dosiert, dass die entstehende Reaktionswärme abgeführt werden kann. Nach der Abreaktion des Propylenoxids erkennbar am Druckabfall wird 510 g eines Gemischs aus Ethylenoxid und Propylenoxid im Molverhältnis von 1:1 erneut so dosiert, dass die entstehende Reaktionswärme abgeführt werden kann. Nach der Abreaktion erkennbar am Druckabfall auf den Ausgangsdruck wird das Produkt mittels OH-Zahl-Titration, NMR-Spektroskopie und GPC-Molmassenbestimmung analysiert.

| OH-Zahl in mg KOH/g nach DIN 53240 | Berechnete Molmasse Mn aus OH-Zahl in g/mol | NMR Molverhältnis aus ¹H NMR Signalen Doppelbindung-Methacryl : PO : EO : CH₂OH | GPC Charakterisierung (lipophile GPC in THF mit PEG Eichung) |
|---|---|---|---|
| 69 | 810 | 1 : 8,9 : 6 : 1,03 | ein Hauptpeak > 93 % mit Maximum bei ca. 780 g/mol keine Polymeranteile mit Molmassen über 2000 g/mol |

Es ist damit ein Methacrylsäureester-(EO)(PO)₄(EO-POstatistisch)₅-OH Blockcopolymer entstanden. Hochpolymere Anteile mit Molmassen > 10000 g/mol wie sie durch Polymerisation der konjugierten Doppelbindung der Methacrylsäuregruppe entstehen würden, sind nicht vorhanden

### Beispiel 5

Das Makromonomer aus Beispiel 1 wird als Coemulgator bei der Emulsionspolymerisation von n-Butylacrylat, Methylmethacrylat und Methacrylsäure in wässriger Flotte verwendet. Das sich in situ bildende Copolymer aus Butylacrylat, Methylmethacrylat, Methacrylsäure und dem Produkt aus Beispiel 1 hat gute emulsionsstabilisierende Eigenschaften.

500 ml deionisiertes Wasser werden in einem Glaskolben vorgelegt und 15 g Natriumalkylsulfat, 15 g 3,75 %ige Ammoniumperoxodisulfatlösung, 11,5 g n-Butylacrylat, 11,8 g Methylmethacrylat und 0,48 g Methacrylsäure zugegeben, gerührt und unter Stickstoff auf 80°C aufgeheizt. Über einen Zeitraum von 4 Stunden wird eine Monomeremulsion unter Stickstoff zudosiert, die aus 470 ml Wasser, 16 g Natriumalkylsulfonat, 8 g des Produkts aus Beispiel 1, 440 g n-Butylacrylat, 440 g Methylmethacrylat, 8,8 g Methacrylsäure und 2,85 g Ammoniumperoxodisulfat besteht. Nach vollständiger Dosierung der Monomeremulsion und Nachpolymerisation von einer Stunde bei 80°C wird die Polymerdispersion abgekühlt und auf einen neutralen pH-Wert eingestellt.

Das sich in situ bildende Copolymer aus Butylacrylat, Methylmethacrylat, Methacrylsäure und dem Produkt aus Beispiel 1 ist eine stabile wässrige Polymerdispersion.

### Beispiel 6:

Das Makromonomer aus Beispiel 2 wird als Coemulgator bei der Emulsionspolymerisation einer Styrol/Acrylat-Dispersion eingesetzt.
Dazu wird eine Monomerlösung (1) aus 332 ml deionisiertem Wasser, 4,8 g Natriumalkylsulfat, 15 g des Produkts aus Beispiel 2, 3,6 g Natriumhydrogencarbonat, 216 g Styrol, 300 g n-Butylacrylat, 144 g Methylacrylat und 6,6 g Methacrylsäure hergestellt. Ebenso wird eine Initiatorlösung (2) aus 3,33 g Ammoniumperoxodisulfat und 85,5 ml deionisiertem Wasser hergestellt.
204 g deionisiertes Wasser wird in einem 2 Liter Reaktionsgefäß vorgelegt, 6,6 g des Produkts aus Beispiel 2 werden zugegeben. Unter Stickstoffatmosphäre und Rühren wird die Mischung auf 80°C aufgeheizt, dann werden 22 ml der Initiatorlösung (2) und 25 ml der Monomerlösung zugegeben und so die Emulsionspolymerisation gestartet. Bei einer Reaktionstemperatur von 80°C werden unter Kühlung die restliche Monomerlösung (1) und die Initiatorlösung (2) innerhalb von 3 Stunden zudosiert. Anschließend wird eine weitere Stunde geheizt und das Produkt auf pH-Wert 6 bis 8 neutralisiert.

Es entsteht eine stabile Polymerdispersion mit einem Feststoffgehalt von 50 %.

### Vergleichsbeispiel 1

In einem 3 I Druckreaktor wird 1 mol (144 g) Hydroxypropylmethacrylat und 0,03 g Hydrochinonmonomethylether sowie 1,2 g Benzochinon und 0,2 g des in EP-A-1 276 563 beschriebenen DMC-Katalysators vorgelegt. Das Gemisch wird unter Stickstoff auf eine Temperatur auf 110°C aufgeheizt und bei einem Druck von etwa 2 bar eine Menge von 58 g Propylenoxid so dosiert, dass die entstehende Reaktionswärme abgeführt werden kann. Nach der Abreaktion des Propylenoxids erkennbar am Druckabfall werden 1994 g Ethylenoxid erneut so dosiert, dass die entstehende Reaktionswärme abgeführt werden kann. Nach der Abreaktion erkennbar am Druckabfall auf den Ausgangsdruck wird das Produkt mittels OH-Zahl-Titration, NMR-Spektroskopie und GPC-Molmassenbestimmung analysiert.

| OH-Zahl in mg KOH/g nach DIN 53240 | Berechnete Molmasse Mn aus OH-Zahl in g/mol | NMR Molverhältnis aus ¹H NMR Signalen Doppelbindung-Methacryl : PO : EO : CH₂OH | GPC Charakterisierung (lipophile GPC in THF mit PEG Eichung) |
|---|---|---|---|
| 37,2 | 1550 | 1 : 1,7 : 30 : 1,17 | ein Peak 68 % mit Maximum bei ca. 1500 g/mol, ein Paek mit 22 % Maximum 4000 g/mol, ein Peak mit ca. 10 % mit Molmassen über 10000 g/mol |

Es ist damit das Zielprodukt nur zu einem kleinen Teil (68 %) entstanden. Daneben sind unerwünschte hochmolekulare Verunreinigungen mit Molmassen > 4000 bzw. > 10000 g/mol vorhanden.

## Patentansprüche

1. Verfahren zur Herstellung von Monoestern α,β-ethylenisch ungesättigter Carbonsäuren mit Polyalkylenglykolen, indem man eine α,β-ethylenisch ungesättigte Carbonsäure oder deren reaktives Derivat mit einem C₂- bis C₄-Alkylenoxid oder einem Gemisch solcher Alkylenoxide zur Reaktion bringt, **dadurch gekennzeichnet, dass** diese Reaktion in Gegenwart von 10 bis 10.000 ppm, bezogen auf das Gewicht der eingesetzten α,β-ethylenisch ungesättigten Carbonsäure, an entweder 2,2,6,6-Tetramethylpiperidin-1-oxyl oder 4-Hydroxy-2,2,6,6-Tetramethyl-piperidin-1-oxyl stattfindet.

2. Verfahren nach Anspruch 1, wobei das Reaktionsprodukt der Formel 1 entspricht 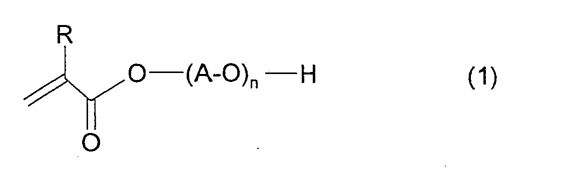 worin
R für Wasserstoff oder Methyl
A für C₂- bis C₄-Alkylen und
n für eine Zahl von 1 bis 500 stehen.

3. Verfahren nach Anspruch 1, wobei das Reaktionsprodukt der Formel 2 entspricht 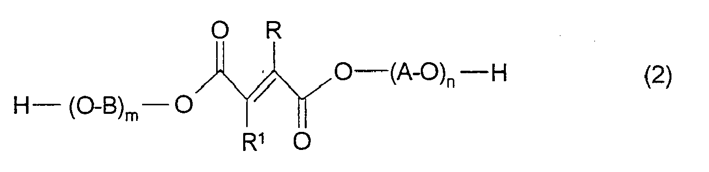 worin
R, R¹ unabhängig voneinander H oder Methyl,
A, B unabhängig voneinander C₂- bis C₄-Alkylen,
n, m unabhängig voneinander Zahlen von 1 bis 500 bedeuten.

4. Verfahren nach Anspruch 2 oder 3, wobei n und m unabhängig voneinander Zahlen von jeweils zwischen 3 und 250, insbesondere zwischen 5 und 200 bedeuten.

5. Verfahren nach einem oder mehreren der Ansprüche 1 bis 4, worin die Alkoxylierung mit einem Gemisch aus Ethylenoxid und Propylenoxid oder nacheinander mit Ethylenoxid und Propylenoxid in beliebiger Reihenfolge durchgeführt wird, so dass das Reaktionsprodukt eine statistische oder blockweise angeordnete gemischte Alkylenoxidgruppe umfasst, die mindestens 50 mol-% Ethylenoxidgruppen enthält.

6. Verfahren nach einem oder mehreren der Ansprüche 1 bis 5, worin als konjugierte ungesättigte Carbonsäure oder deren Derivat Acrylsäure, Methacrylsäure oder deren Monoester mit Mono-, Di-, Triethylenglykol oder Mono-, Di-, Tripropylenglykol oder Butylenglykol eingesetzt werden.

7. Verfahren nach einem oder mehreren der Ansprüche 1 bis 5, worin als konjugierte ungesättigte Carbonsäure oder deren Derivat Fumarsäure, Maleinsäure, Itaconsäure oder deren Di-ester mit Mono-, Di-, Triethylenglykol oder Mono-, Di-, Tripropylenglykol oder Butylenglykol eingesetzt werden.

8. Verfahren nach einem oder mehreren der Ansprüche 1 bis 7, welches in Gegenwart eines DMC-Katalysators durchgeführt wird.

9. Zusammensetzung, erhältlich nach dem Verfahren gemäß einem oder mehreren der Ansprüche 1 bis 8, und darüber hinaus enthaltend 10 bis 10.000 ppm 2,2,6,6-Tetramethylpiperidin-1-oxyl oder 4-Hydroxy-2,2,6,6-Tetramethylpiperidin-1-oxyl.

10. Verwendung von 10 bis 10.000 ppm 2,2,6,6-Tetramethylpiperidin-1-oxyl oder 4-Hydroxy-2,2,6,6-Tetramethylpiperidin-1-oxyl als Polymerisationsinhibitor bei der Umsetzung einer α,β-ethylenisch ungesättigten Carbonsäure oder deren reaktiven Derivats mit Alkylenoxiden in Gegenwart von DMC Katalysatoren.

11. Verwendung der Zusammensetzung gemäß Anspruch 9 zur Herstellung von Copolymeren mit weiteren olefinisch ungesättigten Verbindungen.

12. Verwendung der Zusammensetzung gemäß Anspruch 9 in der radikalischen Copolymerisation mit einer mehreren olefinisch ungesättigten Verbindung in wässriger Lösung oder Emulsion als copolymerisierbarer Emulgator.

13. Verwendung der Zusammensetzung gemäß Anspruch 9 als Additiv, Emulgator oder Coemulgator zur Emulsionsstabilisierung in Emulsions- oder Suspensionspolymerisationen.
